# FASCICULE DE BREVET EUROPEEN

(11) **EP 1 038 275 B1**
(45) Date de publication et mention de la délivrance du brevet: **27.02.2002**
(21) Numéro de dépôt: 98958333.1
(22) Date de dépôt: 04.12.1998
(51) Int. Cl.: G07C 1/30, G07B 15/02, G07F 7/08

(54) **TICKET ELECTRONIQUE DE STATIONNEMENT PAYANT**
ELEKTRONISCHER PARKSCHEIN
PUBLIC PARKING ELECTRONIC TICKET

(30) Priorité: 10.12.1997 FR 9715650
(43) Date de publication de la demande: 27.09.2000
(73) Titulaire: SCHLUMBERGER Systèmes, 92120 Montrouge (FR)
(72) Inventeur: PERREARD, David, F-25320 Montferrand le Château (FR)
(74) Mandataire: Fernandez, Francis
(86) Numéro de dépôt international: FR9802632
(87) Numéro de publication internationale: WO9930284

(56) Documents cités:
- EP-A- 0 495 741
- WO-A-88/09022
- DE-A- 4 230 866
- DE-U- 9 418 779
- FR-A- 2 660 777
- FR-A- 2 738 071
- GB-A- 2 254 463
- GB-A- 2 284 919

## Description

La présente invention concerne un ticket électronique de stationnement payant.

L'invention trouve une application particulièrement avantageuse dans le domaine général du stationnement payant, et plus spécialement dans celui des parcmètres individuels placés à l'intérieur des véhicules, connus sous le nom d'ICPM, acronyme du terme anglo-saxon "In-Car Parking-Meter".

On connaît des systèmes de parcmètre individuel du type ICPM constitués de deux éléments, à savoir, d'une part, une carte à mémoire électronique préchargée en unités de stationnement, et, d'autre part, un boîtier apte à recevoir ladite carte et comportant un microprocesseur destiné, entre autres, à consommer progressivement au cours du temps les unités de stationnement présentes dans la mémoire de la carte. En outre, ledit boîtier est équipé d'un dispositif d'affichage indiquant, notamment, la date et l'heure de fin de stationnement autorisé.

Un tel système de parcmètre individuel fonctionne de la manière suivante. L'automobiliste introduit dans le boîtier une carte à mémoire électronique qu'il s'est préalablement procurée auprès de l'opérateur de stationnement ou d'un distributeur. Après mise en fonctionnement du système, le microprocesseur du boîtier calcule la date et l'heure de fin de stationnement autorisé en fonction des unités restant dans la carte et, éventuellement, de la tarification en vigueur. L'ensemble boîtier / carte est ensuite disposé derrière le pare-brise du véhicule. Un surveillant du parc de stationnement peut alors à tout moment vérifier le caractère licite de la présence du véhicule en comparant la date et l'heure courantes à la date et l'heure de fin de stationnement autorisé indiquées par le dispositif d'affichage du boîtier (EP-A-0 495 741).

Cependant, ces systèmes de parcmètre individuel connus présentent l'inconvénient que la carte à mémoire électronique chargée en unités de stationnement est insérée en permanence dans le boîtier et qu'elle est donc visible de l'extérieur du véhicule pendant toute la durée du stationnement, ce qui est susceptible de constituer une incitation au vol de la carte dont il est facile de connaître le contenu en unités par comparaison entre la date et l'heure courantes et la date et l'heure de fin de stationnement autorisé affichées.

Aussi, le problème technique à résoudre par l'objet de la présente invention est de proposer un ticket électronique de stationnement payant qui permettrait d'atteindre un degré de sécurisation supérieur aux systèmes ICPM actuellement connus.

La solution au problème technique posé consiste, selon la présente invention, en ce que ledit ticket électronique est constitué d'un boîtier individuel portable autonome comprenant :
- une première mémoire de stockage de régimes tarifaires,
- une deuxième mémoire de stockage d'unités de stationnement,
- des moyens de sélection d'un régime tarifaire stocké dans ladite première mémoire,
- une horloge fournissant la date et l'heure courantes,
- des moyens de calcul de la date et de l'heure de fin de stationnement autorisé compte tenu du régime tarifaire sélectionné, des unités de stationnement stockées dans ladite deuxième mémoire, et de la date et de l'heure courantes,
- un afficheur apte à afficher, au moins, le régime tarifaire sélectionné et la date et l'heure de fin de stationnement autorisé,
- des moyens pour consommer progressivement au cours du temps les unités de stationnement stockées dans la deuxième mémoire,
- des moyens pour stopper à volonté lesdits moyens de consommation progressive d'unités de stationnement.

Ainsi, le ticket électronique de stationnement payant conforme à l'invention fonctionne de manière autonome, les unités de stationnement à consommer étant stockées dans ladite deuxième mémoire du boîtier et non dans une carte extérieure, connectée en permanence au boîtier. Le risque est donc limité aux seules unités contenues dans la deuxième mémoire.

De manière à pouvoir tenir compte d'éventuelles modifications du régime tarifaire, l'invention prévoit que le ticket électronique est apte à recevoir des régimes tarifaires d'un moyen de mise à jour tarifaire. Selon un mode de réalisation de l'invention, ledit moyen de mise à jour tarifaire est une carte à mémoire électronique, dite carte de configuration, apte à coopérer avec un lecteur de cartes à mémoire électronique dudit boîtier. Cette carte de configuration est délivrée au départ par l'opérateur de stationnement concerné et contient, outre les conditions tarifaires proprement dites (taux horaire, durée maximale), des informations relatives à l'accès par les usagers à des tarifs de stationnement privilégiés : temps gratuit, tarif résident par exemple. Le transfert du régime tarifaire de la carte de configuration à la première mémoire de stockage se fait simplement en insérant la carte dans le lecteur.

De même, il y a avantage à ce que le ticket électronique de l'invention puisse être chargé en unités de stationnement ou rechargé après épuisement des unités contenues dans la deuxième mémoire. A cet effet, il est prévu que, selon l'invention, le ticket électronique est apte à recevoir des unités de stationnement d'un moyen de transfert d'unités de stationnement. D'une manière générale, ledit moyen de transfert d'unités de stationnement est une carte à mémoire électronique compatible avec le lecteur de cartes du boitier.

Selon une disposition particulièrement avantageuse de l'invention, ledit boîtier est équipé de moyens de transfert sélectif d'un nombre d'unités de stationnement donné du moyen de transfert d'unités de stationnement à ladite deuxième mémoire de stockage. L'usager a ainsi la possibilité de choisir le nombre d'unités qu'il désire transférer dans le boîtier. Pour une plus grande sécurité, il est recommandé de ne transférer que les seules unités correspondant à la durée de stationnement prévue, les unités restantes étant maintenues dans la carte de transfert, laquelle est conservée par l'usager, à l'extérieur du boîtier et du véhicule.

Conformément à une forme de réalisation particulière de l'invention, ladite carte de configuration constitue également ledit moyen de transfert d'unités de stationnement. Il s'agit donc d'une carte unique permettant à la fois la mise à jour de la première mémoire de stockage du boîtier et le transfert d'unités dans la deuxième mémoire de stockage dudit boîtier. Cette carte de configuration peut à son tour être actualisée du point de vue tarifaire et/ou rechargée en unités de stationnement. A cette fin, l'invention propose que la carte de configuration est apte à recevoir une mise à jour tarifaire et des unités de stationnement auprès d'un terminal autonome, tel qu'un horodateur, ou auprès d'un terminal non autonome, comme un terminal-point de vente.

Selon une première variante, la carte de configuration n'est destinée qu'à la mise à jour tarifaire et ledit moyen de transfert d'unités de stationnement est une carte électronique jetable, apte à coopérer avec ledit lecteur de cartes à mémoire électronique du boîtier. Cette carte jetable peut être obtenue dans des points de vente agréés par l'opérateur de stationnement.

Selon une deuxième variante, ledit moyen de mise à jour tarifaire et ledit moyen de transfert d'unités de stationnement est une carte à mémoire électronique jetable, dite carte autonome, apte à coopérer avec ledit lecteur de cartes à mémoire électronique du boîtier. Cette carte autonome est distribuée par l'opérateur de stationnement au travers ses divers de points de vente.

La description qui va suivre, en regard du dessin annexé, donné à titre d'exemple non limitatif, fera bien comprendre en quoi consiste l'invention et comment elle peut être réalisée.

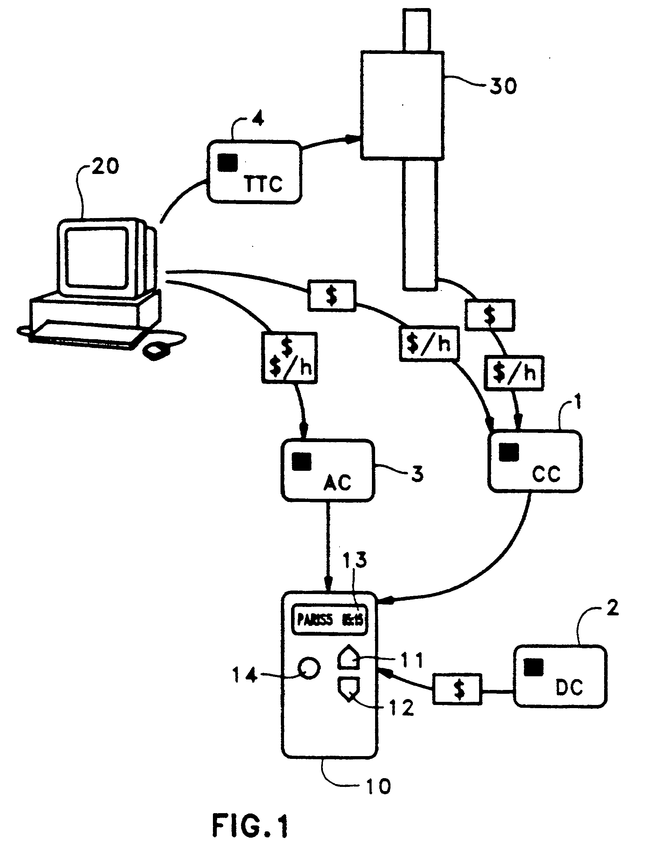

La figure 1 est une représentation schématique d'un système de stationnement payant fonctionnant avec un ticket électronique conforme à l'invention.

Sur le schéma de la figure 1 est montré un ticket 10 de stationnement constitué par un boîtier individuel portable comprenant une mémoire de stockage de régimes tarifaires, dite première mémoire. Il s'agit par exemple des tarifs de stationnement pour des zones différentes d'une même ville : centre-ville, périphérie, etc... Le boîtier 10 comprend également une deuxième mémoire pour stocker des unités de stationnement, exprimées par exemple en valeur financière. Lesdites première et deuxième mémoires peuvent être deux mémoires séparées ou deux zones distinctes d'une seule et même mémoire.

Le choix d'un régime tarifaire est effectué au moyen de deux boutons 11, 12 de défilement permettant de faire défiler la liste des régimes tarifaires dans un sens et dans l'autre.

Par ailleurs, le boîtier 10 est muni d'un microprocesseur qui, en relation avec le contenu des première et deuxième mémoires de stockage, est capable de calculer la date et l'heure de fin de stationnement autorisé en fonction du régime tarifaire sélectionné, des unités de stationnement stockées dans la deuxième mémoire, et de la date et l'heure courantes, lesquelles sont fournies par une horloge du boîtier 10.

Le régime tarifaire sélectionné et la date et l'heure de fin de stationnement sont visualisés sur un afficheur 13 du boîtier 10 de manière à permettre à un surveillant de contrôler la licéité du stationnement lorsque le ticket électronique est placé derrière le pare-brise d'un véhicule. Bien entendu, l'afficheur 13 peut afficher d'autres informations telles que le montant payé, le temps écoulé depuis le début du stationnement et l'identité de l'opérateur de stationnement.

Pendant la durée de stationnement, ledit microprocesseur consomme progressivement les unités de stationnement stockées dans la deuxième mémoire jusqu'à épuisement, à moins que l'usager ne revienne à son véhicule avant la fin de stationnement autorisé et stoppe la consommation d'unités en appuyant par exemple sur une touche 14 d'arrêt de fonctionnement du ticket électronique 10. Les unités non consommées seront utilisées ultérieurement, lors d'une période suivante de stationnement payant.

Dans la mesure où les régimes tarifaires sont susceptibles d'être modifiés au cours du temps, il est nécessaire de prévoir un moyen de mise à jour de la première mémoire du ticket électronique 10.

Comme l'indique la figure 1, ledit moyen de mise à jour tarifaire peut être une carte 1 à mémoire électronique, dite carte de configuration, émise par l'opérateur de stationnement au moyen d'un ordinateur 20. Dans ce cas, le boîtier 10 est équipé d'un lecteur de cartes à mémoire de manière à transférer le régime tarifaire ($/h) contenu dans la carte 1 de configuration dans la première mémoire de stockage du boîtier 10.

La figure 1 montre également que la carte 1 de configuration peut être utilisée comme moyen de transfert d'unités ($) de stationnement dans la deuxième mémoire de stockage du boîtier 10. Dans ce mode de fonctionnement, l'usager se procure une carte 1 de configuration auprès de l'opérateur de stationnement et l'insère dans le lecteur de cartes de son ticket électronique 10. Le régime tarifaire ($/h) de la carte de configuration est alors transféré dans ladite première mémoire. Puis, l'usager a la possibilité de transférer des unités ($) de stationnement de la carte 1 à la dite deuxième mémoire. Le nombre d'unités de stationnement transférées au boîtier 10 est choisi en fonction de la durée de stationnement prévue à l'aide de moyens de transfert sélectrif tels que les boutons 11, 12. Cependant, l'usager peut, s'il le désire, transférer la totalité des unités de stationnement contenues dans la carte 1 de configuration.

Selon le mode de réalisation de la figure 1, la carte de configuration est actualisable du point de vue tarifaire et/ou rechargeable en unités de stationnement auprès d'un terminal autonome comme un horodateur 30. Ledit horodateur contient une mémoire renfermant le régime tarifaire courant, cette mémoire étant mise à jour par l'opérateur 20 au moyen d'une carte 4 de transfert de tarif. Pour actualiser et/ou recharger sa carte 1 de configuration, l'usager doit l'insérer dans un lecteur de cartes de l'horodateur 30. Le nouveau régime tarifaire ($/h) contenu dans la mémoire dudit horodateur s'inscrit alors dans la carte 1 de configuration. Pour recharger la carte 1 en unité ($) de stationnement, l'usager introduit dans l'horodateur 30 des pièces de monnaie, des billets ou encore une carte bancaire ou porte-monnaie électronique ou tout autre moyen de paiement accepté par l'horodateur. La carte 1 de configuration se trouve prête à être utilisée dans le ticket électronique 10.

Naturellement, cette opération d'actualisation et/ou de recharge de la carte de configuration peut également être effectuée auprès d'un terminal non autonome, tel qu'un terminal-point de vente, ou auprès des guichets de l'opérateur, par exemple à l'aide d'un ordinateur muni d'un lecteur de cartes.

On peut voir sur la figure 1 qu'en complément de la carte 1 de configuration, l'usager peut utiliser une carte 2 à mémoire électronique jetable, compatible avec le lecteur du boîtier 10 et destinée uniquement au transfert d'unités ($) de stationnement dans le ticket électronique 10. Dans ce cas, la carte 1 de configuration est obligatoirement utilisée pour transférer le régime tarifaire ($/h).

Enfin, selon un autre mode de réalisation, le moyen de mise à jour tarifaire et le moyen de transfert d'unités de stationnement est une carte 3 à mémoire électronique jetable, compatible avec le lecteur du boîtier 10. Cette carte, dite autonome, est également délivrée par l'opérateur 20 et disponible auprès de ses distributeurs.

## Revendications

1. Ticket électronique de stationnement payant, **caractérisé en ce qu'**il est constitué d'un boîtier (10) individuel portable autonome comprenant :
- une première mémoire de stockage de régimes tarifaires,
- une deuxième mémoire de stockage d'unités de stationnement,
- des moyens (11, 12) de sélection d'un régime tarifaire stocké dans ladite première mémoire,
- une horloge fournissant la date et l'heure courantes,
- des moyens de calcul de la date et de l'heure de fin de stationnement autorisé compte tenu du régime tarifaire sélectionné, des unités de stationnement stockées dans ladite deuxième mémoire, et de la date et de l'heure courantes,
- un afficheur (13) apte à afficher, au moins, le régime tarifaire sélectionné et la date et l'heure de fin de stationnement autorisé,
- des moyens pour consommer progressivement au cours du temps les unités de stationnement stockées dans la deuxième mémoire,
- des moyens (14) pour stopper à volonté lesdits moyens de consommation progressive d'unités de stationnement,
et **en ce qu'**il est apte à recevoir des régimes tarifaires d'un moyen (1, 3) de mise à jour tarifaire.

2. Ticket électronique selon la revendication 1, **caractérisé en ce que** ledit afficheur (13) est également apte à afficher au moins l'une des informations suivantes : montant payé, temps écoulé depuis le début de stationnement, identité de l'opérateur de stationnement.

3. Ticket électronique selon l'une des revendications 1 ou 2, **caractérisé en ce qu'**il est apte à recevoir des unités de stationnement d'un moyen (1, 2, 3) de transfert d'unités de stationnement.

4. Ticket électronique selon l'une quelconque des revendications 1 à 3, **caractérisé en ce que** ledit moyen de mise à jour tarifaire est une carte (1) à mémoire électronique, dite carte de configuration, apte à coopérer avec un lecteur de cartes à mémoire électronique dudit boîtier (10).

5. Ticket électronique selon les revendications 3 et 4, **caractérisé en ce que** ladite carte (1) de configuration constitue également ledit moyen de transfert d'unités de stationnement.

6. Ticket électronique selon l'une des revendications 4 ou 5, **caractérisé en ce que** la carte (1) de configuration est apte à recevoir une mise à jour tarifaire et des unités de stationnement auprès d'un terminal autonome (30).

7. Ticket électronique selon la revendication 6, **caractérisé en ce que** ledit terminal autonome est un horodateur (30).

8. Ticket électronique selon l'une des revendications 4 ou 5, **caractérisé en ce que** la carte (1) de configuration est apte à recevoir une mise à jour tarifaire et des unités de stationnement auprès d'un terminal non autonome.

9. Ticket électronique selon les revendications 3 et 4, **caractérisé en ce que** ledit moyen de transfert d'unités de stationnement est une carte (2) à mémoire électronique jetable, apte à coopérer avec ledit lecteur de cartes à mémoire électronique du boîtier (10).

10. Ticket électronique selon l'une quelconque des revendications 3 à 9, **caractérisé en ce que** ledit moyen de mise à jour tarifaire et ledit moyen de transfert d'unités de stationnement est une carte (3) à mémoire électronique jetable, dite carte autonome, apte à coopérer avec ledit lecteur de cartes à mémoire électronique du boîtier (10).

11. Ticket électronique selon la revendication 3, **caractérisé en ce que** ledit boîtier (10) est équipé de moyens (11, 12) de transfert sélectif d'un nombre d'unités de stationnement donné du moyen (1, 2, 3) de transfert d'unités de stationnement à ladite deuxième mémoire de stockage.

## Patentansprüche

1. Elektronischer Parkplatz-Zahlschein, **dadurch gekennzeichnet, daß** er aus einem einzelnen, tragbaren, autonomen Kasten (10) besteht, umfassend:
- einen ersten Speicher zur Speicherung der Tarifklassen,
- einen zweiten Speicher zum Speichern der Parkeinheiten,
- Mittel (11, 12) zur Auswahl einer in besagtem ersten Speicher gespeicherten Tarifklasse
- eine das aktuelle Datum und die aktuelle Uhrzeit liefernde Uhr,
- Mittel zur Berechnung des Datums und der Uhrzeit des Ablaufs der aufgrund der ausgewählten Tarifklasse autorisierten Parkzeit, der in besagtem zweiten Speicher gespeicherten Parkeinheiten und des aktuellen Datums und der aktuellen Uhrzeit,
- eine Anzeige (13), die geeignet ist, wenigstens die ausgewählte Tarifklasse und das Datum und die Uhrzeit des Ablaufs der autorisierten Parkdauer anzuzeigen,
- Mittel zum progressiven Verbrauch der im zweiten Speicher gespeicherten Parkeinheiten im Laufe der Zeit,
- Mittel (14) zum beliebigen Stoppen besagter Mittel zum progressiven Verbrauch der Parkeinheiten,
und dadurch, daß er geeignet ist, Tarifklassen eines Mittels (1, 3) zur Aktualisierung der Tarife aufzunehmen.

2. Elektronischer Zahlschein gemäß Anspruch 1, **dadurch gekennzeichnet, daß** besagte Anzeige (13) ebenfalls geeignet ist, wenigstens eine der folgenden Informationen anzuzeigen: bezahlter Betrag, seit Beginn der Parkdauer abgelaufene Zeit, Identität des Operators der Parkdauer.

3. Elektronischer Zahlschein gemäß Anspruch 1 oder 2, **dadurch gekennzeichnet, daß** er geeignet ist, die Parkeinheiten eines Mittels (1, 2, 3) zur Übertragung der Parkeinheiten aufzunehmen.

4. Elektronischer Zahlschein gemäß Anspruch 1 bis 3, **dadurch gekennzeichnet, daß** besagtes Mittel zur Aktualisierung der Tarife eine elektronische Speicherkarte (1), eine sogenannte Konfigurationskarte ist, die geeignet ist, mit einem Kartenlesegerät mit elektronischem Speicher besagten Kastens (10) zusammenzuwirken.

5. Elektronischer Zahlschein gemäß Anspruch 3 und 4, **dadurch gekennzeichnet, daß** besagte Konfigurationskarte (1) ebenfalls besagtes Mittel zur Übertragung von Parkeinheiten bildet.

6. Elektronischer Zahlschein gemäß Anspruch 4 oder 5, **dadurch gekennzeichnet, daß** die Konfigurationskarte (1) geeignet ist, eine Aktualisierung der Tarife und die Parkeinheiten bei einem autonomen Terminal (30) aufzunehmen.

7. Elektronischer Zahlschein gemäß Anspruch 6, **dadurch gekennzeichnet, daß** besagtes autonomes Terminal ein Zeitstempler (30) ist.

8. Elektronischer Zahlschein gemäß Anspruch 4 oder 5, **dadurch gekennzeichnet, daß** die Konfigurationskarte (1) geeignet ist, eine Aktualisierung der Tarife und die Parkeinheiten bei einem nicht autonomen Terminal aufzunehmen.

9. Elektronischer Zahlschein gemäß Anspruch 3 und 4, **dadurch gekennzeichnet, daß** besagtes Mittel zur Übertragung von Parkeinheiten eine Einwegkarte (2) mit elektronischem Speicher ist, die geeignet ist, mit besagtem Kartenlesegerät mit elektronischem Speicher des Kastens (10) zusammenzuwirken.

10. Elektronischer Zahlschein gemäß Anspruch 3 bis 9, **dadurch gekennzeichnet, daß** besagtes Mittel zur Aktualisierung der Tarife und besagtes Mittel zur Übertragung von Parkeinheiten eine Einwegkarte (3) mit elektronischem Speicher, eine sogenannte autonome Karte ist, die geeignet ist, mit besagtem Kartenlesegerät mit elektronischem Speicher des Kastens (10) zusammenzuwirken.

11. Elektronischer Zahlschein gemäß Anspruch 3, **dadurch gekennzeichnet, daß** besagter Kasten (10) mit Mitteln (11, 12) zur selektiven Übertragung einer gegebenen Anzahl Parkeinheiten des Mittels (1, 2, 3) zum Übertragen von Parkeinheiten an besagten zweiten Speicher zum Speichern ausgerüstet ist.

## Claims

1. Electronic parking ticket subject to charges, **characterized in that** it is constituted by an autonomous portable individual box (10) including:
- a first memory for storing tariff rates,
- a second memory for storing parking units,
- means (11, 12) for selecting a tariff rate stored in said first memory,
- a clock supplying the current date and time,
- means for calculating the date and the time of the end of authorized parking, having regard to the selected tariff rate, parking units stored in said second memory, and the current date and time,
- a display unit (13) for displaying at least the selected tariff rate and the date and time of the end of authorized parking,
- means to gradually consume over a period of time the parking units stored in the second memory,
- means (14) to deliberately stop said means for gradually consuming the parking units,
and **in that** it is able to receive the tariff rates from a tariff updating device.

2. Electronic ticket according to claim 1, **characterized in that** said display unit (13) is also able to display at least one of the following types of information: amount paid, time elapsed since the start of parking, and the identity of the parking operator.

3. Electronic ticket according to one of claims 1 to 2, **characterized in that** it is able to receive the parking units from a parking unit transfer device (1, 2, 3).

4. Electronic ticket according to one of claims 1 to 3, **characterized in that** said tariff updating device is an electronic smart card (1) known as a configuration card able to cooperate with an electronic smart card reader of said box (10).

5. Electronic ticket according to claims 3 and 4, **characterized in that** said configuration card (1) also constitutes said parking unit transfer device.

6. Electronic ticket according to claim 4 or 5, **characterized in that** the configuration card (1) is able to receive a tariff updating and parking units from an autonomous terminal (30).

7. Electronic ticket according to claim 6, **characterized in that** said autonomous terminal is a time recorder.

8. Electronic ticket according to one of claims 4 or 5, **characterized in that** the configuration card (1) is able to receive a tariff updating of the parking units from a non-autonomous terminal.

9. Electronic ticket according to claims 3 and 4, **characterized in that** said parking unit transfer device is a disposable electronic smart card (2) able to cooperate with said electronic smart card reader of the box (10).

10. Electronic ticket according to any one of claims 3 to 9, **characterized in that** said tariff updating device and said parking unit transfer device is a disposable electronic smart card (3), is autonomous and is able to cooperate with said electronic smart card reader of the box (10).

11. Electronic ticket according to claim 3, **characterized in that** said box (10) is fitted with means (11, 12) for the selective transfer of a given number of parking units of the parking unit transfer device (1, 2, 3) to said second storage memory.
